# EUROPEAN PATENT SPECIFICATION

(11) **EP 2 389 699 B1**
(45) Date of publication and mention of the grant of the patent: **30.03.2016**
(21) Application number: 10769245.1
(22) Date of filing: 13.04.2010
(51) Int. Cl.: H01M 2/04, H01M 2/06, H01M 2/20, H01M 2/30, H01M 2/02

(54) **SINGLE CELL AND POWER BATTERY PACK COMPRISING THE SAME**
EINZELZELLE UND STROMBATTERIEPACK DAMIT
CELLULE UNIQUE ET BATTERIE D'ALIMENTATION COMPRENANT CETTE DERNIÈRE

(30) Priority: 30.04.2009 CN 200920131243 U
(43) Date of publication of application: 30.11.2011
(73) Proprietor: BYD Company Limited, Shenzhen, Guangdong 518118 (CN)
(72) Inventor: ZHENG, Weixin, Guangdong 518118 (CN)
(74) Representative: Hoffmann Eitle
(86) International application number: PCT/CN2010/071731
(87) International publication number: WO 2010/124556

(56) References cited:
- CN-A- 101 018 641
- CN-A- 101 315 990
- CN-Y- 2 605 668
- CN-Y- 2 717 037
- JP-A- 2002 305 029
- JP-A- 2004 039 274
- JP-A- 2007 157 427
- JP-A- 2007 257 849
- KR-A- 20060 118 798
- US-A1- 2004 224 227
- US-A1- 2008 076 018
- US-B1- 6 599 659

## Description

### FIELD OF THE INVENTION

The present invention relates to battery, more particularly to a single cell with an improved structure and a power battery pack comprising the same.

### BACKGROUND

As batteries are more and more widely used nowadays, demand for enhanced battery performance is growing. Higher power output is required by recent equipment, such as an electric vehicle etc. Normally, a plurality of single cells are connected to form a power battery pack. And bolts and nuts of the single cells are commonly adopted to serve as positive electrode poles and negative electrode poles respectively which are connected in parallel and/or in series to form a desired power source with high power output. However, the connections may cause high contact resistance with heavy weight etc.

JP 2004-039274 A discloses a laminated battery having an electrode tab take out part structure capable of suppressing the transmission of vibrations from the outside of the battery to the electrode core. In particular, the positive electrode tabs and the negative electrode tabs have a protrusion part that is provided between the connecting parts on the inside of the battery case and the exterior of the battery case. Thereby, a protrusion part becomes vibration absorber. To make a laminated battery more stable, when subjected to vibrations, another possibility is to increase the mechanic strength of the connections of the individual tabs inside a battery module consisting of a plurality of laminated batteries. This approach is followed in JP 2007-257849 A. Here positive and negative electrode terminal leads protruding from the inside of a laminated battery to the outside are welded together and in addition fixed by mechanical crimping means.

JP 2007-157427 A discloses a lithium ion rechargeable cell that is constructed by the steps of forming a cell unit by packing an electrode group, in which plate-like positive and negative electrodes and a plate-like separator are superposed in layers, in a cell case and ceiling the electrode group together with an electrolyte; and forming a module by aligning and packing a plurality of cell units in a module case.

### SUMMARY OF THE INVENTION

In viewing thereof, the present invention is directed to solve at least one of the problems existing in the art, such as unstable connection, weak sealing problems which may affect battery safety and output performance. Accordingly, a single cell is provided, which may overcome the unstable connection in prior single cell and the defect sealing performance thereof so that a more safe and reliable cell may be provided. Further, a power battery pack comprising the same is provided.

According to an embodiment of the invention, a single cell may be provided, comprising the features of claim 1.

According to an embodiment of the invention, a power battery pack may be provided, which may comprise a plurality of single cells as mentioned above. The single cells may be connected in parallel, in series or in parallel and series.

According to an embodiment of the invention, the present invention further provided a power battery pack containing multiple above mentioned single cells, the a plurality of single cells are connected with each other in parallel, in series or in parallel and in series.

As described above, because the first end portion of the electrode terminal in the single cell are formed by coiling or overlapping a plurality of layers of flexible conductive sheets, or by combining multiple flexible conductive wires, relative movement, such as sliding, between of the electrical cores may not affect connecting portions in the single cell. Also vibration caused by welding and so on may have less impact on the sealing structure of the battery.

Further, because the second end portion of the electrode terminal in the single cell is formed by coiling or overlapping a plurality of layers of flexible conductive sheets, or by combining multiple flexible conductive wires, relative movement, such as sliding, of the cells may have no or limited effect on the connection portions in the single cell, since the end portions with flexible layered or laminated structure may have an enhanced flexibility and buffering performance. Further, due to the reasons as described above, the battery movement may have no or limited effect on the output performance of the power battery pack, especially that for an electric vehicle, which have a long-standing vibration during the running of the electric vehicle.

### BRIEF DESCRIPTION OF THE DRAWINGS

These and other aspects and advantages of the invention will become apparent and more readily appreciated from the following descriptions taken in conjunction with the drawings in which:
Fig 1 shows a partial schematic view of a single cell according to an embodiment of the present invention;
Fig 2 shows a schematic view of a single cell according to an embodiment of the present invention, where an electrode terminal is connected with a tab in the single cell;
Fig 3 shows a schematic view of a connecting structure between electrode terminals of single cells according to an embodiment of the present invention;
Fig 4 shows a schematic view of Fig.3 where the electrode terminals slide with each other;
Fig 5 is a schematic view of a connecting structure between electrode terminals of single cells according to another embodiment of the present invention; and
Fig 6 shows a perspective view of a power battery pack according to an embodiment of the invention.

The invention can be better understood with reference to the following drawings and description. The components in the figures are not necessarily to scale, emphasis instead being placed upon illustrating the principles of the invention. Moreover, in the figures, like referenced numerals designate corresponding parts throughout the different views.

### DESCRIPTION OF THE EMBODIMENTS OF THE INVENTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

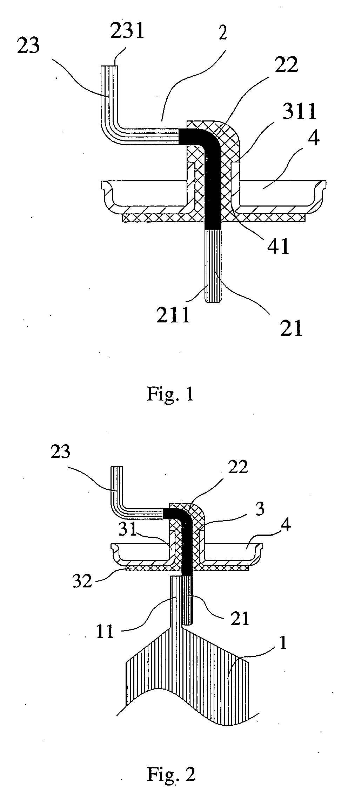

In the following, the present invention will be described in detail in conjunction with the accompanying drawings. Fig 1 shows a partial schematic view of a single cell according to an embodiment of the present invention. Fig 2 shows a schematic view of a single cell according to an embodiment of the present invention, where an electrode terminal 2 may be connected with a tab 11 in the single cell.

According to an embodiment of the invention, a single cell may be provided, which may comprise a shell (not shown), a cover board 4 and an electrode core 1. As shown in Figs. 1 and 2, the electrode core 1 may be accommodated in the shell. The cover board 4 may be connected with the shell in a sealing or hermetic manner. The cover board 4 may have an electrode terminal 2 penetrating through the cover board 4. The electrode terminal 2 may comprise a first end portion 21 connected with the electrode core 1 inside the shell, a second end portion 23 protruding outside the single cell for leading current and a middle portion 22 penetrating through the cover board 4. The first end portion 21 may be connected with a tab 11 of the electrode core 1 inside the single cell 6. A sealing component may be set to seal the connection between the electrode terminal 2 and the cover board 4. The first end portion 21 and the second end portion 23 of the electrode terminal 2 may be formed by coiling or overlapping a plurality of layers of flexible conductive sheets 231, 211, or by combine multiple flexible conductive wires (not shown).

According to an embodiment of the invention, the first end portion 21 and the second end portion 23 of the electrode terminal 2 may be formed by coiling or overlapping a plurality of layers of flexible conductive sheets 231, of which the material may be one or more selected from a group consisting of Cu, Al, Ni, stainless steel, carbon steel, nickel steel alloy. The middle portion 22 may be formed by an integral conductive sheet. The first end portion 21, the middle portion 22 and the second end portion 23 of the electrode terminal 2 may be connected in sequence by any methods known in the art. For example, welding, such as laser welding, electronic beam welding, brazing etc, may be adopted. According to an embodiment of the invention, the first end portion 21, the middle portion 22 and the second end portion 23 of the electrode terminal 2 may be integrally formed, and the electrode terminal 2 may have a thickness of about 0.5-10mm, a width of about 3-200mm and a length of about 3-50mm., which may be realized by overlapping or coiling a plurality of layers of conductive sheets.

According to some embodiments of the present invention, the middle portion 22 may be formed by an integral metal sheet comprising a plurality of layers of sheets. The plurality of layers of sheets may be sealed with each other by one or more of the following methods: hot pressing, cold pressing, composite and diffusing. According to an embodiment of the invention, a hard metal block may be adopted. Further, the number of the layers may be not limited according to the present invention, and it may be adjusted according to the current, toughness etc. The thickness of the conductive sheet may be adjusted according to practical requirement. According to an embodiment of the present invention, it may be 0.5-3mm. Meanwhile, according to an embodiment of the invention, to ensure better connection with the tab 11, the thickness of the first end portion 21 of the electrode terminal 2 may be 0.5-1 time of a total thickness of the positive tab and the negative tab.

According to an embodiment of the present invention, the electrode terminal 2 and the cover board 4 may be integrally formed. The cover board 4 may have a via hole 41 formed thereon, the electrode terminal 2 may penetrate through the via hole 41 with a hollow rivet 31 and an insulating sealing member 32 provided therebetween so that the electrode terminal 2 is fixed therein, the hollow rivet 31 may be integrally formed with the cover board 4. And the insulating sealing member 32 may be disposed within the hollow rivet 31 whereas tightly wraps around an open end 311 of the hollow rivet 31. The hollow rivet 31 may hold and press the insulating sealing member 32 to cause elastic or plastic deformation to tightly seal the electrode terminal 2. The material for the insulating sealing member 32 may be any kind of insulating sealing material known in the art. For example, it may be any material that may be insulating, organic solvent-resistant, HF acid-resistant and also may be those, such as plastic, rubber, resin, glass or ceramic, that can be attached to metal like Cu, Al, stainless steel and so on. And the insulating sealing member 32 may be prepared according to method known in the art such as injection molding and so on.

The electrode core 1 may be formed by a positive plate, a negative plate and a separator provided therebetween which are coiled together with a positive tab and a negative tab protruding from the positive plate and the negative plate in an opposite direction. The positive plate, negative plate respectively may have a dressed area and an undressed area. Active material may be coated on the dressing area whereas the undressed area may be reserved. Further, the undressed area may be formed by scratching an end of the positive or negative plate that may be parallel with the length direction of the plate. The active material may be any positive or negative material known in the art, the dressing method/scratching process as well as the preparation method for the electrode plates may be any method that may be known in the art. According to an embodiment of the present invention, the electrode core 1 may be formed by coiling the positive plate, the negative plate with the separator disposed therebetween. To further improve the battery safety performance, according to an embodiment of the invention, the outer layer of the electrode core 1 may be the separator layer. The positive and negative tabs may be those known in the art, one or more tabs may be welded on the positive plate and the negative plate respectively. According to an embodiment of the invention, the positive tab and the negative tab may be formed by coiling and compressing the undressed area. The tabs may be lead out from both ends of the electrode core 2, or may be led out from one end of the electrode core 1. According to an embodiment of the present invention, the positive tab and the negative tab may be placed in opposite directions, and they may be extended out of the separator provided between the positive plate and the negative plate. According to an embodiment of the present invention, the thickness of the tab may be about 0.5-10mm, the width may be about 3-200mm.

The present invention further provided a power battery pack comprising a plurality of the above mentioned single cells. The plurality of single cells may be connected in parallel, in series or in parallel and series. The connection in series or in parallel and series may be realized by connecting the second end portions 23 of the electrode terminals 2 of the single cells respectively.

According to an embodiment of the present invention, the connection between the first end portions 21 of the electrical terminals 2 in the single cells and the connections between the positive, negative tabs and the second end portions may be realized by welding, which may be, but no limited hereto, ultrasonic welding, laser welding, brazing, flash welding, friction welding, resistance welding and so on. According to an embodiment of the invention, laser welding may be adopted accordingly.

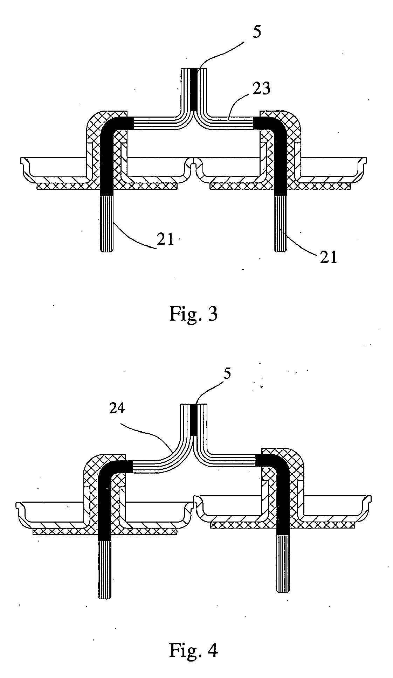

Fig 3 shows a schematic view of a connecting structure between the electrode terminals 2 of the single cells. The metal sheets 231 of second end portions 23 of electrode terminals 2 of two single cells may be attached and welded, thus connecting the two single cells in parallel or in series. Fig 4 shows the connection between electrode terminals 2 whereas there is relative sliding between the single cells. As shown in Fig. 4, the metal sheets of the second end portion 23 of the electrode terminal 2 may have flexible buffering property, which forms a buffering portion 24 during cell relative movement such as mutual relative sliding, therefore further limited or eliminate the influence caused by stress arising in relative movement such as sliding between the single cells at the connection portion 5. Also, the metal foil or sheet structure at the ends of the electrode terminal 2 buffers the influence of mutual relative movement on an insulating sealing portion 3 in the cover board 4 that may cause loosing of the electrode terminal 2 from the insulating sealing portion 3, thus stability of the power battery pack may be enhanced accordingly.

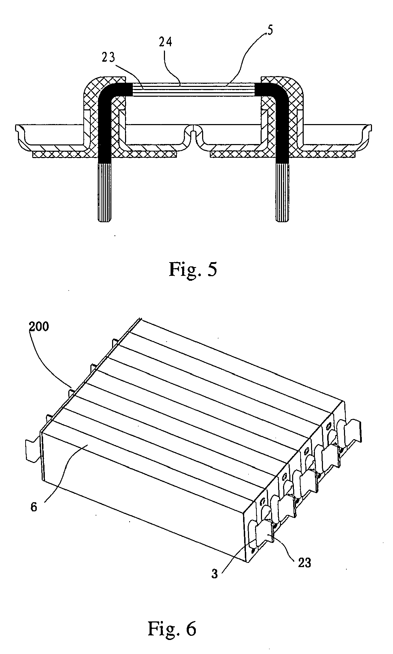

Fig 5 shows the connection between the electrode terminals 3 of the single cells according to another embodiment of the present invention, where the electrode terminals 2 of two single cells may have a bending shape. The second end portions 23 of the electrode terminals 2 may be directly connected with each other via laser welding, thus forming a connection portion 5. The two single cells may be connected in series or in parallel with each other. During cell relative sliding, a buffering portion 24 may be formed to prevent direct damage.

As described above, because the first end portion 21 of the electrode terminal 2 in the single cell are formed by coiling or overlapping a plurality of layers of flexible conductive sheets, or by combining multiple flexible conductive wires (not shown), relative movement, such as sliding, between of the electrical cores 2 may not affect connecting portions in the single cell. Also vibration caused by welding and so on may have less impact on the sealing structure of the single cell.

Further, because the second end portion 23 of the electrode terminal 2 in the single cell is formed by coiling or overlapping a plurality of layers of flexible conductive sheets, or by combining multiple flexible conductive wires, relative movement, such as sliding, of the cells may have no or limited effect on the connection portions in the single cell, since the end portions with flexible layered or laminated structure may have an enhanced flexibility and buffering performance.

As shown in Figs. 3-5, the electrical terminals of neighboring single cells may be butt jointed (Figs. 3-4) or directly connected by laser welding (Fig. 5).

Fig 6 shows a perspective view of the power battery pack 200 according to an embodiment of the present invention. The power battery pack 200 comprises a plurality of single cells 6, each single cell 6 comprises a shell, an electrode core 1 accommodated in the shell and a cover board assembly for connecting and sealing the shell. The cover board assembly may comprise a cover board 4, an electrode terminal 2 penetrating through the cover board 4 and an insulating portion 3 for sealing and insulation. The plurality of single cells 6 may form the power battery pack 200 by connecting the second portion 23 of the electrode terminals 2 in parallel and/or in series. Due to the reasons as described above, the battery movement may have no or limited effect on the output performance of the power battery pack 200, especially the battery pack for an electric vehicle, which have a long-standing vibration during the running of the electric vehicle.

Although explanatory embodiments have been shown and described, it would be appreciated by those skilled in the art that changes, alternatives, and modifications can be made in the embodiments without departing from the scope of the invention as defined by the appendent claims.

## Claims

1. A single cell, comprising:
a shell;
a cover board (4) sealing an open end of the shell;
an electrode core (1) with a tab (11) accommodated inside the shell;
an electrode terminal (2) penetrating through the cover board with a first end portion (21) located inside the shell, a second end portion (23) protruding outside the shell and a middle portion (22) connected between the first end portion (21) and the second end portion (23) penetrating through the cover board (4) in an insulating manner; **characterized in that**
the first end portion (21) and the second end portion (23) are formed by a plurality of flexible conductive members (231, 211) combined together; and the first end portion (21) is connected with the tab (11).

2. The single cell according to claim 1, wherein the conductive members (231, 211) are conductive sheets (231, 211) or wires respectively.

3. The single cell according to claim 2, wherein the conductive sheets (231, 211) are coiled or overlapped together, and the conductive wires are combined together.

4. The single cell according to claim 1, wherein the middle portion (22) is formed by an integral conductive sheet.

5. The single cell according to claim 4, wherein the integral conductive sheet is formed by a plurality of layers of conductive sheets insulated with each other.

6. The single cell according to claim 1 , wherein the first end portion (21), the middle portion (22) and the second end portion (23) of the electrode terminal (2) are integrally formed, and the electrode terminal (2) has a thickness of about 0.5-10mm, a width of about 3-200mm and a length of about 3-50mm.

7. The single cell according to claim 1 , wherein the cover board (4) has a via hole (41) formed thereon, and the electrode terminal (2) penetrates through the via hole (41) with a hollow rivet (31) and an insulating sealing member (32) provided therebetween so that the electrode terminal (2) is fixed therein, the hollow rivet (31) is integrally formed with the cover board (4), and the insulating sealing member (32) is disposed within the hollow rivet (4) whereas tightly wraps around an open end (311) of the hollow rivet (31).

8. The single cell according to claim 1, wherein the electrode core (1) is formed by a positive plate, a negative plate and a separator provided therebetween which are coiled together with a positive tab and a negative tab protruding from the positive plate and the negative plate in an opposite direction.

9. The single cell according to claim 8, wherein the first end portion (21) has a thickness of 0.5-1 time of a total thickness of the positive tab and the negative tab.

10. A power battery pack comprising a plurality of single cells according to claim 1 which are connected in parallel, in series or in parallel and series.

11. The power battery pack according to claim 10, wherein the electrical terminals (2) of neighboring single cells are butt jointed or directly connected by laser welding.

## Patentansprüche

1. Einzel-Batteriezelle mit:
einer Hülle;
einer Abdeckplatte (4), die ein offenes Ende der Hülle abdichtet;
einem Elektrodenkern (1) mit einem Anschlussstreifen (11), der in der Hülle aufgenommen ist;
einem Elektrodenanschluss (2), der durch die Abdeckplatte tritt, wobei ein erster Endabschnitt (21) in der Hülle angeordnet ist, ein zweiter Endabschnitt (23) von der Hülle nach außen vorsteht, und ein mittlerer Abschnitt (22), der den ersten Endabschnitt (21) und den zweiten Endabschnitt (23) verbindet, auf eine isolierte Weise durch die Abdeckplatte (4) tritt,
**dadurch gekennzeichnet, dass**
der erste Endabschnitt (21) und der zweite Endabschnitt (23) durch mehrere flexible leitfähige Elemente (231, 211) gebildet sind, welche miteinander zusammengefasst sind, und der erste Endabschnitt (21) mit dem Anschlussstreifen (11) verbunden ist.

2. Einzel-Batteriezelle nach Anspruch 1, bei der die leitfähigen Elemente (231, 211) jeweils leitfähige Bahnen (231, 211) oder Drähte sind.

3. Einzel-Batteriezelle nach Anspruch 2, bei der die leitfähigen Bahnen (231, 211) miteinander verrollt sind oder einander überlappen und die leitfähigen Drähte miteinander zusammengefasst sind.

4. Einzel-Batteriezelle nach Anspruch 1, bei welcher der mittlere Abschnitt (22) durch eine einstückige leitfähige Bahn ausgebildet ist.

5. Einzel-Batteriezelle nach Anspruch 4, bei der die einstückige leitfähige Bahn aus mehreren Schichten von voneinander isolierten leitfähigen Bahnen ausgebildet ist.

6. Einzel-Batteriezelle nach Anspruch 1, bei welcher der erste Endabschnitt (21), der mittlere Abschnitt (22) und der zweite Endabschnitt (23) des Elektrodenanschlusses (2) einstückig ausgebildet sind und der Elektrodenanschluss (2) eine Dicke von ungefähr 0,5 bis 10 mm, eine Breite von ungefähr 3 bis 200 mm und eine Länge von ungefähr 3 bis 50 mm aufweist.

7. Einzel-Batteriezelle nach Anspruch 1, bei der die Abdeckplatte (4) ein daran ausgebildetes Durchgangsloch (41) aufweist, und der Elektrodenanschluss (2) durch das Durchgangsloch (41) tritt, wobei eine Hohlniete (31) und ein isolierendes Abdichtelement (32) dazwischen derart angeordnet sind, dass der Elektrodenanschluss (2) darin fixiert ist, wobei die Hohlniete (31) integral mit der Abdeckplatte (4) ausgebildet ist und das isolierende Abdichtelement (32) innerhalb der Hohlniete (4) angeordnet ist, wobei es eng um ein offenes Ende (311) der Hohlniete (31) gewickelt ist.

8. Einzel-Batteriezelle nach Anspruch 1, bei welcher der Elektrodenkern (1) durch eine positive Platte, eine negative Platte und eine dazwischen angeordnete Trennschicht ausgebildet ist, welche miteinander verrollt sind, wobei ein positiver Anschlusstreifen und eine negativer Anschlussstreifen von der positiven Platte und der negativen Platte in einer entgegengesetzten Richtung vorstehen.

9. Einzel-Batteriezelle nach Anspruch 8, bei welcher der erste Endabschnitt (21) eine Dicke von 0,5- bis 1-mal der Gesamtdicke des positiven Anschlussstreifens und des negativen Anschlussstreifens aufweist.

10. Leistungs-Batteriepaket mit mehreren Einzel-Batteriezellen nach Anspruch 1, welche parallel, in Serie oder parallel und in Serie verbunden sind.

11. Leistungs-Batteriepaket nach Anspruch 10, bei dem die elektrischen Anschlüsse (2) von benachbarten Einzel-Batteriezellen stoßverbunden sind oder direkt durch Laserverschweißen verbunden sind.

## Revendications

1. Elément individuel comprenant :
une gaine ;
un couvercle (4) scellant une extrémité ouverte de la gaine ;
un noyau d'électrode (1) avec une languette (11) reçue à l'intérieur de la gaine ;
une borne d'électrode (2) pénétrant à travers le couvercle avec une première partie d'extrémité (21) située à l'intérieur de la gaine, une seconde partie d'extrémité (23) faisant saillie à l'extérieur de la gaine et une partie centrale (22) connectée entre la première partie d'extrémité (21) et la seconde partie d'extrémité (23), pénétrant à travers le couvercle (4) en mode isolant ;
**caractérisé en ce que**
la première partie d'extrémité (21) et la seconde partie d'extrémité (23) sont formées par une pluralité d'éléments conducteurs flexibles (231, 211) combinés ensemble ; et la première partie d'extrémité (21) est connectée à la languette (11).

2. Elément individuel selon la revendication 1, dans lequel les éléments conducteurs (231, 211) sont des tôles conductrices (231, 211) ou des fils métalliques conducteurs, respectivement.

3. Elément individuel selon la revendication 2, dans lequel les tôles conductrices (231, 211) sont enroulées ou se chevauchent mutuellement et les fils métalliques conducteurs sont combinés mutuellement.

4. Elément individuel selon la revendication 1, dans lequel la partie centrale (22) est formée d'une tôle conductrice d'un seul tenant.

5. Elément individuel selon la revendication 4, dans lequel la tôle conductrice d'un seul tenant est formée d'une pluralité de couches de tôles conductrices isolées mutuellement.

6. Elément individuel selon la revendication 1, dans lequel la première partie d'extrémité (21), la partie centrale (22) et la seconde partie d'extrémité (23) de la borne d'électrode (2) sont formées d'un seul tenant et la borne d'électrode (2) a une épaisseur d'environ 0,5 à 10 mm, une largeur d'environ 3 à 200 mm et une longueur d'environ 3 à 50 mm.

7. Elément individuel selon la revendication 1, dans lequel le couvercle (4) a un trou d'interconnexion (41) qui y est formé et la borne d'électrode (2) pénètre à travers le trou d'interconnexion (41) avec un rivet creux (31) et un élément d'étanchéité isolant (32) disposé entre eux de sorte que la borne d'électrode (2) y soit fixée , le rivet creux (31) est formé d'un seul tenant avec le couvercle (4) et l'élément d'étanchéité isolant (32) est disposé dans le rivet creux (4) tout en s'enroulant étroitement autour d'une extrémité ouverte (311) du rivet creux (31).

8. Elément individuel selon la revendication 1, dans lequel le noyau d'électrode (1) est formé par une plaque positive, une plaque négative et un séparateur disposé entre elles, qui sont conjointement enroulés avec une languette positive et une languette négative faisant saillie de la plaque positive et de la plaque négative dans un sens opposé.

9. Elément individuel selon la revendication 8, dans laquelle la première partie d'extrémité (21) a une épaisseur de 0,5 à 1 fois l'épaisseur totale de la languette positive et de la languette négative.

10. Bloc-batterie d'alimentation comprenant une pluralité d'éléments individuels selon la revendication 1, qui sont connectées en parallèle, en série ou en parallèle et en série.

11. Bloc-batterie d'alimentation selon la revendication 10, dans lequel les bornes électriques (2) d'éléments individuels voisins sont jointes bout à bout ou directement connectées par soudage au laser.
